# EUROPEAN PATENT SPECIFICATION

(11) **EP 0 991 204 B1**
(45) Date of publication and mention of the grant of the patent: **04.05.2005**
(21) Application number: 99119049.7
(22) Date of filing: 29.09.1999
(51) Int. Cl.: H04B 7/005

(54) **A transmission power control method using a pilot symbol pattern**
Verfahren zur Sendeleistungsregelung mit Pilotensymbolmuster
Procédé de commande de la puissance de transmission avec une configuration de symboles pilotes

(30) Priority: 29.09.1998 JP 27567998
(43) Date of publication of application: 05.04.2000
(73) Proprietor: NEC CORPORATION, Tokyo (JP)
(72) Inventor: Arimitsu, Kazuhiro, Minato-ku, Tokyo (JP)
(74) Representative: VOSSIUS & PARTNER

(56) References cited:
- WO-A-98/26519
- WO-A-99/65171
- US-A- 5 799 011

## Description

The present invention relates to a code division multiple access (CDMA) communication system, and more particularly to a transmission power control method in a mobile station.

The CDMA communication method is expected to be applied to mobile communication systems because of its strength against interference and hindrance. In the CDMA communication, a transmitting side spreads a user signal for transmission in accordance with a spreading code and a receiving side de-spreads the spread signal received in accordance with the identical spreading code to generate the original user signal.

In this communication system, a plurality of transmitters spread user signals using respective spreading codes which are mutually different from each other and which have orthogonality. Each receiver selects an appropriate spreading code in the de-spreading of each spread signal received to thereby identify the communication. Consequently, a plurality of communications can be conducted using one frequency band.

However, in the CDMA communication system, the receiver can de-spread the data received only if synchronization of the data is detected. For this reason, a base station uses a perch channel to transmit a signal independently of a channel for the transmission of the user signal. After the synchronization is established on the perch channel, the receiver keeps synchronization with a pilot symbol included in the signal of each channel.

It is difficult to completely keep orthogonality between the spreading codes used in the communication system. Actually, the respective spreading codes are not completely orthogonal to each other and there appears a correlational component between the codes. The correlational component becomes interference for its own communication and hence reduces communication quality. Since the interference component appears due to the correlational component, the interference components increase as the number of communications becomes greater.

In general, to guarantee good communication quality in a radio communication system, it is required to develop a fixed signal-to-noise ratio. In a spectrum spread communication system, one frequency band is used by all communications, and hence a fixed signal-to-(noise + interference) ratio is required to secure good communication quality. The ratio is usually designated as Eb/I0 in which Eb indicates a desired power of a reception wave and I0 is power of an interference wave. Eb/I0 required to guarantee fixed communication quality is referred to as "necessary Eb/I0".

As mentioned above, a transmission signal sent to one receiver becomes a noise component for another receiver, namely, causes interference with a desired signal transmitted to another receiver. Therefore, when a plurality of transmission signals sent to the receivers have the same power, Eb/I0 can be most efficiently guaranteed. Consequently, in the CDMA communication system, the base station controls transmission power of each mobile station such that Eb/I0 acquired through communication with the mobile station becomes a reference Eb/I0. The reference Eb/I0 is set according to the necessary Eb/I0, and is substantially equal to .the necessary Eb/I0.

Specifically, a signal transmitted from the base station on a downward line to the mobile station includes a transmission power control (TPC) symbol indicating "up" or "down" of transmission power to the mobile station. Using the TPC symbol, the base station indicates each mobile station to increase ("up") or to decrease ("down") the current transmission power.

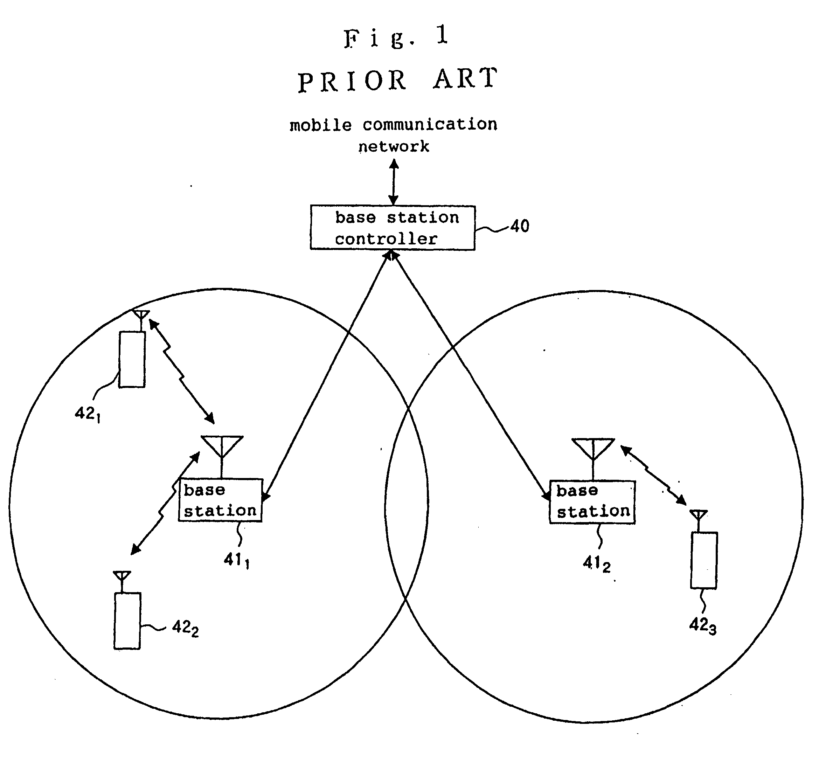

A constitution of a CDMA communication system of this type will be explained with reference to Fig.1.

The system comprises a base station controller 40, base stations 41₁ and 41₂, and mobile stations 42₁ to 42₃.

Base station controller 40 is connected to a mobile communication network, controls operation of base stations 41₁ and 41₂, and transfers communication data.

Base stations 41₁ and 41₂ connect radio channels to respective mobile stations 42₁ and 42₂ and 42₃ in respective cells to establish communication channels.

In Fig. 1, mobile stations 42₁ and 42₂ establish communication channels to base station 41₁ for data communication and mobile station 42₃ establishes a communication channel to base station 42₂ for data communication.

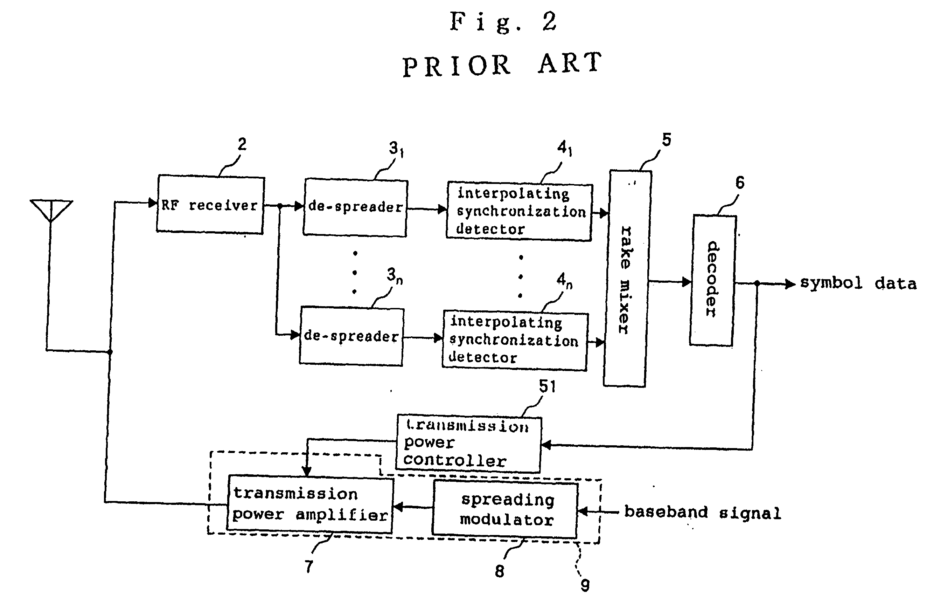

The structure of the mobile station in the CDMA communication system will be explained with reference to Fig.2.

The mobile station comprises a radio frequency (RF) receiver 2, de-spreaders 3₁ to 3ₙ, interpolating synchronization detectors 4₁ to 4ₙ, a rake mixer 5, a decoder 6, a transmission power controller 51, and a radio frequency (RF) transmitter 9. RF transmitter 9 includes a transmission power amplifier 7 and a spreading modulator 8.

A high-frequency radio signal received by an antenna is amplified by receiver 2 and is converted into a signal with a frequency lower than the high frequency signal, i.e., a baseband signal. The baseband signal is then converted by receiver 2 into a digital signal. The digital baseband signal is fed to de-spreaders 3₁ to 3ₙ and are respectively de-spread in accordance with particular a spreading code, to demodulate only desired signals to be outputted.

Interpolating synchronization detectors 4₁ to 4ₙ determine respective phase errors from pilot symbols included in the desired signals respectively from de-spreaders 3₁ to 3ₙ and perform operation to minimize the phase errors. Rake mixer 5 performs an optimum mixing with each other of the signals for which the phase errors have been minimized by interpolating synchronization detectors 4₁ to 4ₙ to thereby produce one signal. Decoder 6 decodes the signal from rake mixer 5 to obtain a symbol data.

Spreading modulator 8 performs spectrum spread modulation for the baseband signal. Transmission power amplifier 7 amplifies the modulated signal by modulator 8 to a predetermined transmission power.

Transmission power controller 51 extracts the TPC symbol from the symbol data from decoder 6. If the TPC symbol is "up", controller 51 gives an indication to amplifier 7 to increase the transmission power by a predetermined value. If the TPC symbol is "down", controller 51 gives an indication to amplifier 7 to decrease the transmission power by a predetermined value.

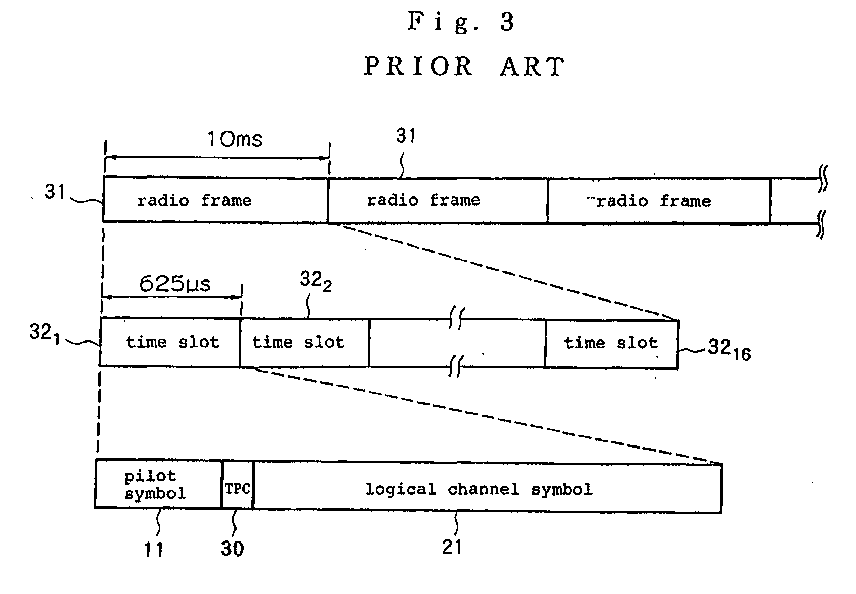

A physical data format on a downward line for transmission from the base station to the mobile station will now be explained with reference to Fig.3.

Data transmitted by a base station consists of a plurality of radio frames 31 each having a time period of 10 milliseconds. Frame 31 comprises 16 time slots 32₁ to 32₁₆. Each time slot comprises a pilot symbol 11, a TPC symbol 30, and a logical channel symbol 21. Pilot symbol 11 takes a value varying for each time slot and with a pattern previously determined. This enables a mobile station to recognize a incoming pilot symbol before the symbol is received. As a result, the mobile station can establish synchronization using the pilot symbol.

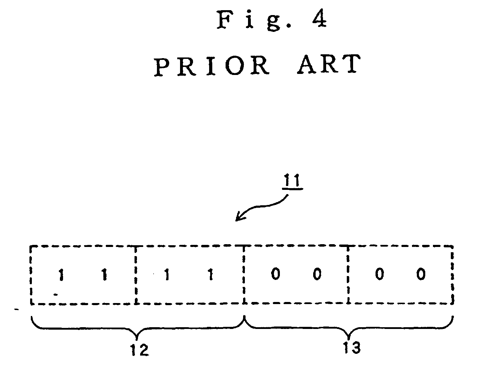

As shown in Fig.4, pilot symbol 11 consists of a synchronization word 12 and a time slot number 13.

Time slot number 13 takes a value varying for each time slot to which pilot symbol 11 is added. As shown in Fig.3, radio frame 31 consists of 16 time slots 32₁ to 32₁₆,and hence the time slot number 13 also has 16 patterns.

In the CDMA communication system of this kind, synchronization word 12 is assigned only with a predetermined value such as "1111" and bears no special meaning.

In the format of Fig. 3, one symbol of data is allocated to TPC symbol 30. TPC symbol 30 has, for example, two patterns as shown in Table 1 in which "11" denotes an indication to increase transmission power and "00" denotes an indication to decrease the same.

**Table 1**

| TPC symbol | transmission power control |
|---|---|
| 1 1 | +1.0dB |
| 0 0 | -1.0dB |

The mobile station performs a transmission power control such that it increases the current transmission power by 1.0 dB when it received an indication to increase the transmission power, and decreases the transmission power by 1.0 dB when it received an indication to decrease the transmission power.

In the mobile station, however, the synchronization is established using pilot symbol 11 and the transmission power is controlled using TPC symbol 30. Therefore, the number of logic channel symbols 21 is reduced and hence the symbol rate can not be larger.

Since only one TPC symbol 30 is assigned to the mobile station, the transmission power can be stepwise controlled only in one step value, i.e., ±1 dB. When transmission power is controlled such that signal transmission is stopped during communication and the original transmission power is restored directly from the state, a change for a desired transmission power can not be made unless an indication to increase or decrease the transmission power with TPC symbol is continuously transmitted. Consequently, the transmission power cannot be flexibly achieved in the conventional CDMA system.

WO-A-99/65171 (which falls under the provisions of Art 54(3)EPC) discloses a system in which control information (for example power control) is embedded in the pilot symbols.

US-A-5 799 011 discloses a CDMA power control channel estimation system including a power control command on a traffic channel downlink signal. The power control command is included in the frame in a designated field.

It is an object of the present invention to provide a mobile station in which the symbol rate becomes higher by increasing the number of logical channel symbols.

It is another object of the present invention to provide a mobile station capable of flexibly controlling the transmission power by increasing the number of control steps in the transmission power control operation.

These objects are achieved with the features of the claims. A mobile station according to the present invention receives a spread signal transmitted from a base station, de-spreads the spread signal to obtain symbol data. In addition, the mobile station establishes synchronization using a pilot symbol included in the symbol data, and performs control operation in response to an indication from the base station in accordance with a pattern of the pilot symbol.

In this manner, the mobile station according to the present invention establishes synchronization and control operations in response to an indication from the base station only by use of the pilot symbol. Therefore, the symbol to indicate a control operation from the base station to the mobile station is not required and the number of logic channel symbols can be increased. This makes it possible to increase the symbol rate.

According to one embodiment of the present invention, the control operation responsive to an indication from the base station includes controlling of transmission power, controlling of transmission rate, or controlling, during a handoff operation, of disconnection of a communication channel that has been established to a base station before the handoff operation.

This embodiment establishes synchronization, controls the transmission power, or controls the transmission rate only using the pilot symbol. Consequently, the TPC symbol, the RI symbol or the like to indicate control operations from the base station to the mobile station is not needed, and increase of the number of logical channel symbols also increase the symbol rate.

According to another embodiment of the present invention, the pilot symbol has two pattern types.

According to another embodiment of the present invention, the pilot symbol has three or more pattern types.

This embodiment enables the number of control steps to control transmission power to be increased, and transmission power can thus be controlled more flexibly, as compared with the transmission power control using only one kind of pilot symbol.

The above and other objects, features, and advantages of the present invention will become apparent from the following description with reference to the accompanying drawings which illustrate examples of the present invention.
Fig. 1 is a schematic block diagram showing constitution of a conventional CDMA mobile communication system;
Fig. 2 is a block diagram showing structure of a conventional mobile station;
Fig. 3 is a diagram showing a signal format of a physical channel in the mobile station of Fig. 2;
Fig. 4 is a diagram showing a pilot symbol pattern;
Fig. 5 is a block diagram showing a configuration of a first embodiment of a mobile station in accordance with the present invention; and
Fig. 6 is a diagram showing a signal format of a physical channel in the mobile station of Fig. 5.

### First embodiment

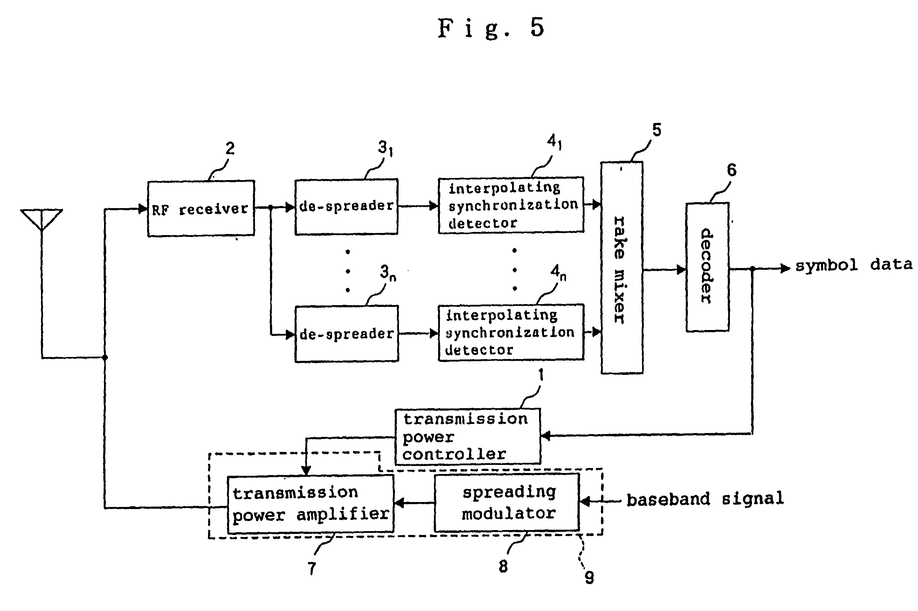

Referring now to Fig. 5, there is shown a mobile station in a CDMA communication system according to a first embodiment of the present invention.

The mobile station of the first embodiment is a modification of the conventional mobile station shown in Fig. 2 and includes a transmission power controller 1 in place of transmission power controller 51. The components in Fig. 5, which correspond to those of Fig. 2 are assigned the same reference numerals.

The controller 1 gives an indication to transmission power amplifier 7 to change transmission power in accordance with a pilot symbol pattern in the symbol data decoded by decoder 6. This embodiment of the CDMA communication system therefore allows elimination of the TPC symbol used in the CDMA system shown in Fig. 3.

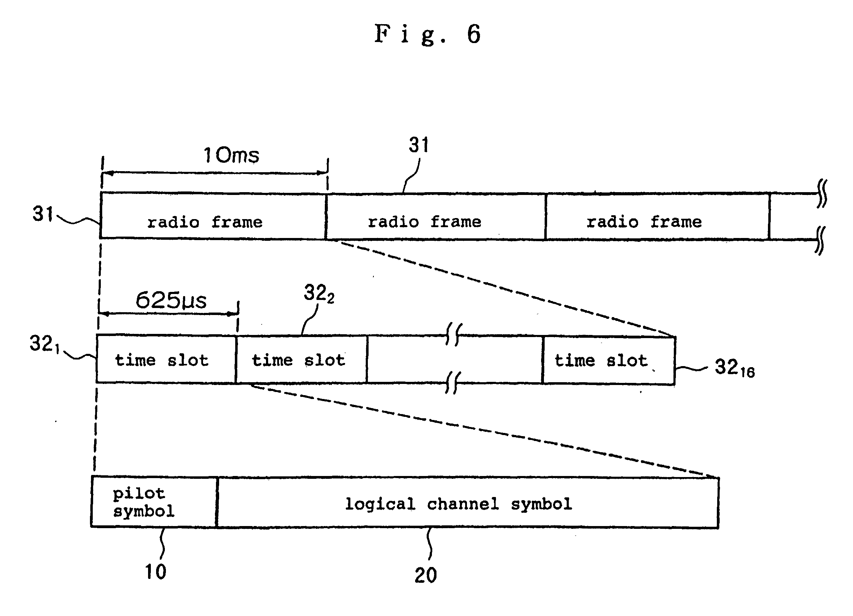

In this embodiment, each of time slots 32₁ to 32₁₆ consists of pilot symbol 10 and logical channel symbol 20, as shown in Fig. 6.

Pilot symbol 10 has a pattern varying between the time slots. As can be seen from Table 2, two kinds of patterns are assigned to the synchronization word. That is, the pilot symbol has 32 (= 16 × 2) patterns.

**Table 2**

| pilot symbol | | transmission power control |
|---|---|---|
| synchronization word | time slot NO. | |
| 1 1 1 1 | - - - - | +1.0 dB |
| 0 0 0 0 | - - - - | -1.0 dB |

When the synchronization word is "1111", the pilot symbol shows an indication to increase the transmission power. When the synchronization word is "0000", the pilot symbol shows an indication to decrease the transmission power. The mobile station thus establishes synchronization using the pilot symbol having 32 patterns. For the synchronization word of "0000" in the pilot symbol, transmission power controller 1 instructs transmission power amplifier 7 to increase transmission power by 1.0 dB. For the synchronization word of "1111" in the pilot symbol, transmission power controller 1 controls transmission power amplifier 7 to decrease transmission power by 1.0 dB.

This enables the base station to perform control of downward transmission power from the base station to the mobile station without using a TPC symbol.

As apparent from Fig. 6, the unnecessity of TPC symbol 30 allows one symbol can be additionally assigned the logical channel symbol 20 as compared with the conventional logical channel symbols 21, thereby increasing the number of logical channel symbols 20 and hence the symbol rate.

When the transmission rate is, for example, 32 kilobits per second (kbps) and one time slot consists of 20 symbols, logical channel symbol 21 includes 15 symbols in the conventional CDMA system of Fig. 3, while in this embodiment logical channel symbol 20 includes 16 symbols greater than logical channel symbol 21 by one.

One radio frame is 10 ms long, so that the logical channel of the conventional example has a symbol rate of 15 symbols/10 ms = 1500 symbols/s. In contrast, the symbol rate of the logical channel in this embodiment is 16 symbols/10 ms = 1600 symbols/s, being increased as compared with that of the conventional example.

### Second embodiment

Table 3 shows the pilot symbol and transmission power control in the second embodiment of the CDMA communication system according to the present invention, with four patterns, "1111", "1100", "0011", and "0000" as synchronous word. This allows the selections of the control steps of the transmission power from among four values of ±1.0 dB and ±2.0 dB.

**Table 3**

| pilot symbol | | transmission power control |
|---|---|---|
| synchronization word | time slot NO. | |
| 1 1 1 1 | - - - - | +2.0 dB |
| 1 1 0 0 | - - - - | +1.0 dB |
| 0 0 1 1 | - - - - | -1.0 dB |
| 0 0 0 0 | - - - - | -2.0 dB |

Although in the present embodiment the explanation is given regarding a case in which the pilot symbol has four patterns, the synchronization word including two symbols (four bits) allows up to16 types of patterns.

Thus, to increase the number of formats assigned to the pilot symbol pattern by three or more, the transmission power control steps increases as compared with the transmission power control performed with one TPC symbol in the mobile station of Fig. 2.

However, to increase the number of pilot symbol patterns renders the synchronization establishing operation complicated because the increased number of patterns needs to be referred to. Specifically, although the mobile station of Fig. 2 establish synchronization using 16 pilot symbol patterns, the first and second embodiments must respectively refer to 32 and 64 pilot symbol patterns to establish synchronization.

It is therefore necessary to optimize the number of patterns for the pilot symbol by comparing complexity of the synchronizing operation with flexibility of the transmission power control.

Even when four steps are assigned to control transmission power, the transmission power control becomes more flexible not by assigning step values which are similar to each other such as ±1.0 dB and ±2.0 dB, but by assigning step value which are more apart from each other, for example, ±1.0 dB and ±5.0 dB. In this case, to greatly increase transmission power, ±5.0 dB may used, and for a finer adjustment of transmission power, ±1.0 dB may be used.

### Third embodiment

Although in the first and second embodiments, the TPC symbol has been eliminated by controlling transmission power using the formats of the pilot symbol patterns, the third embodiment uses the synchronization word to specify the transmission rate, which is indicated by a rate information (RI) symbol in the first and second embodiments.

In the CDMA communication system of Fig. 1, the base station performs a transmission rate control operation for the mobile station by transmitting a rate information symbol to indicate a desired transmission rate. To control the transmission rate, the third embodiment however does not require the rate information symbol and can consequently increase the symbol rate for the logical channel.

In the third embodiment, as shown in Table 4, the received pilot symbol includes one of the synchronization words "0000", "0001", "0010", "0011", "1100", and "1111" respectively corresponding to transmission rates 32, 64, 128, 256, 512, and 1024 kbps.

**Table 4**

| pilot symbol | | transmission rate |
|---|---|---|
| synchronization word | time slot NO. | |
| 1 1 1 1 | - - - - | 1024 kbps |
| 1 1 0 0 | - - - - | 512 kbps |
| 0 0 1 1 | - - - - | 256 kbps |
| 0 0 1 0 | - - - - | 128 kbps |
| 0 0 0 1 | - - - - | 64 kbps |
| 0 0 0 0 | - - - - | 32 kbps |

The mobile station changes the transmission rate, based on the synchronization word pattern of the pilot symbol received.

The first to third embodiments require neither the TPC symbol nor the RI symbol by the control of the transmission power and the control to specify the transmission rate in accordance with the format of the pilot symbol pattern. The present invention is not limited to the embodiments associated with such controls, but is also applicable to a case in which other control operations are employed, for example, during the disconnection of a communication channel between the pertinent mobile station and the base station connected thereto during a handoff operation.

In the description of the first to third embodiments, the pilot symbol includes four symbols, i.e., eight bits. However, the present invention is also applicable to a case the pilot symbol includes other than four symbols. The pilot symbol may include eight symbols (16 bits) depending on the symbol rate and the channel type. When the pilot symbol includes eight symbols, the transmission power control steps can be increased further and the control of transmission power becomes more flexible as compared with that using the pilot symbol including four symbols.

## Claims

1. A mobile station, comprising:
a means for receiving a spread signal transmitted from a base station;
a means for de-spreading the spread signal to obtain symbol data; and
a means for establishing synchronization using a pilot symbol included in the symbol data, and for controlling operation in response to an indication from the base station in accordance with a pattern of the pilot symbol,
wherein the operation responsive to an indication from the base station is controlling, during a handoff operation, the disconnection of a communication channel that has been established to a base station before the handoff operation.

2. A mobile station according to claim 1, wherein the operation indicated by the base station is control of transmission power.

3. A mobile station according to claim 1, wherein the operation indicated by the base station is control of transmission rate.

4. A mobile station according to claim 1, 2, or 3, wherein the pilot symbol has two pattern types.

5. A mobile station according to claim 1, 2, or 3, wherein the pilot symbol has three or more pattern types.

6. A code division multiple access (CDMA) communication system, comprising:
a CDMA base station for inserting a pilot symbol for the establishment of synchronization at a fixed time interval in a symbol pattern to be transmitted, and for changing a pattern of the pilot symbol according to respective control indications for a mobile station; and
a mobile station according to any one of claims 1 to 5.

## Patentansprüche

1. Mobilstation mit:
einer Einrichtung zum Empfangen eines von einer Basisstation übertragenen Spreizsignals;
einer Einrichtung zum Entspreizen des Spreizsignals, um Symboldaten zu erhalten; und
einer Einrichtung zum Einrichten einer Synchronisation unter Verwendung eines in den Symboldaten enthaltenen Pilotsymbols und zum Steuern einer Operation in Antwort auf eine Anweisung von der Basisstation gemäß einem Muster des Pilotsymbols;
wobei durch die in Antwort auf eine Anweisung von der Basisstation ausgeführte Operation während einer Handoff-Operation die Verbindungsunterbrechung eines Kommunikationskanals gesteuert wird, der vor der Handoff-Operation zu einer Basisstation eingerichtet gewesen ist.

2. Mobilstation nach Anspruch 1, wobei die durch die Basisstation angewiesene Operation eine Sendeleistungsregelung ist.

3. Mobilstation nach Anspruch 1, wobei die durch die Basisstation angewiesene Operation eine Übertragungsratensteuerung ist.

4. Mobilstation nach Anspruch 1, 2 oder 3, wobei das Pilotsymbol zwei Mustertypen aufweist.

5. Mobilstation nach Anspruch 1, 2 oder 3, wobei das Pilotsymbol drei oder mehr Mustertypen aufweist;

6. Codemultiplex-Vielfachzugriff- (CDMA) Kommunikationssystem mit:
einer CDMA-Basisstation zum Einfügen eines Pilotsymbols zum Einrichten einer Synchronisation in einem festen Zeitintervall in einem zu übertragenden Symbolmuster und zum Ändern eines Musters des Pilotsymbols gemäß entsprechenden Steuerungsanweisungen für eine Mobilstation; und
einer Mobilstation nach einem der Ansprüche 1 bis 5.

## Revendications

1. Station mobile, comprenant :
des moyens destinés à recevoir un signal étalé émis depuis une station de base ;
des moyens destinés à désétaler le signal étalé afin d'obtenir des données de symbole ; et
des moyens pour établir une synchronisation en utilisant un symbole pilote compris dans les données de symbole, et pour commander une opération en réponse à une indication provenant de la station de base en conformité avec un arrangement du symbole pilote,
dans laquelle l'opération en réponse à une indication provenant de la station de base commande, durant une opération de transfert intercellulaire, la déconnexion d'un canal de communication qui a été établi à une station de base avant l'opération de transfert intercellulaire.

2. Station mobile selon la revendication 1, dans laquelle l'opération indiquée par la station de base est la commande de la puissance d'émission.

3. Station mobile selon la revendication 1, dans laquelle l'opération indiquée par la station de base est la commande du débit d'émission.

4. Station mobile selon la revendication 1, 2 ou 3, dans laquelle le symbole pilote a deux types d'arrangements.

5. Station mobile selon la revendication 1, 2 ou 3, dans laquelle le symbole pilote a trois types d'arrangements ou plus.

6. Un système de communication à accès multiple par répartition en code (CDMA), comprenant :
une station de base CDMA destinée à insérer un symbole pilote afin d'établir la synchronisation à un intervalle de temps fixe dans un arrangement de symbole devant être émis, et destinée à changer un arrangement du symbole pilote selon des indications de commande respectives pour une station mobile ; et
une station mobile selon l'une quelconque des revendications 1 à 5.
